(19) Europäisches Patentamt
European Patent Office
Office européen des brevets

(11) **EP 1 733 858 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
*B29B 13/06* (2006.01)   *F26B 25/06* (2006.01)

(21) Anmeldenummer: **06090104.8**

(22) Anmeldetag: **10.06.2006**

(54) **Verfahren für eine gesteuerte Förderung von Schüttgut mit Erfassung der Verweilzeit in einem Zwischenspeicher**

Method for the controlled conveyance of bulk with the record of the dwell time of the bulk in an intermediate storage device

Procédé pour le transport contrôlé de matière en vrac avec enregistrement de la durée de résidence du matériau dans un dispositif de stockage intermédiaire

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.06.2005 DE 102005028265**

(43) Veröffentlichungstag der Anmeldung:
**20.12.2006 Patentblatt 2006/51**

(73) Patentinhaber: **Wittmann Robot System Gmbh
90571 Schwaig (DE)**

(72) Erfinder: **Andreas Vierling
65468 Trebur (DE)**

(74) Vertreter: **Voigt, Günter
Patentanwälte Dr. Schulze & Voigt
Nordring 152
90119 Nürnberg (DE)**

(56) Entgegenhaltungen:
**EP-A1- 1 083 033   DE-A1- 3 926 689
DE-C1- 10 016 010**

**Beschreibung**

Die Erfindung betrifft Verfahren für eine gesteuerte Förderung von Schüttgut mit Erfassung der Verweilzeit in einem Zwischenspeicher, wobei über ein Fördergerät jeweils ein gerätetypisches Fördervolumen dem Zwischenspeicher zugeführt wird und die Fördervorgänge gezählt werden gemäß Oberbegriff des Anspruchs 1, wie aus der DE 39 26 689 A1 bereits bekannt ist.

In der Kunststoffverarbeitung kommt der Förderung und Zwischenbehandlung von Ausgangsstoffen für eine nachfolgende Weiterbearbeitung eine erhebliche Bedeutung zu. Besonders wichtig ist dabei auch der Feuchtigkeitsanteil, der laufend überwacht werden muss.

Es ist grundsätzlich bekannt, den Durchsatz von Ausgangs-oder Zwischenprodukten mit Hilfe von über die Zeit verteilten Impulsen zu erfassen und daraus resultierend bestimmte Fördermittel zu steuern. Dabei wird beispielsweise die Anzahl der Impulse n pro Zeitraster t gezählt und der so erlangte Mittelwert ausgewertet. Insbesondere ist aber auch die Verweilzeit Tv bzw. der Materialdurchsatz M des Materials in einem für die Behandlung vorgesehenen Behälter, beispielsweise in einem Silo, von großer Bedeutung.

Eine entsprechende Steuerung kann beispielsweise zum Einsatz kommen, wenn ein Fördergerät ein für den Massenfluss konstruiertes Silo befüllt. Über eine Silosonde LS2 wird das Silo mit dem Volumen Vs gefüllt gehalten. Das Fördergerät hat ein gerätetypisches Fördervolumen Vf, welches mit einer Fördersonde LS1 überwacht wird. In einem Zeitraster t werden erfolgreiche Fördervorgänge n gezählt. Die Verweilzeit Tv beträgt:

$$Tv = (Vs \cdot t) / (n \cdot Vf)$$

Sofern die Schüttdichte r bekannt ist, kann der Materialdurchsatz M wie folgt berechnet werden:

$$M = r \cdot Vs / Tv$$

oder

$$M = r \cdot n \cdot Vf / t.$$

Wird die Fördersonde LS1 nicht erreicht, so ist der Fördergang für die Auswertung ungültig und wird ignoriert.

In der Praxis ergibt es sich des öfteren, dass dem Silo kontinuierlich Material entnommen wird, das Silo aber über einen bestimmten Zeitraum nicht nachgefüllt werden kann. Dadurch kann es zu starken Schwankungen der berechneten Verweilzeit ( bzw. des Durchsatzes) kommen. Wenn dann erneut Material zum Nachfüllen zur Verfügung steht, so wird innerhalb einer relativ kurzen Zeit das Silo wieder aufgefüllt. Die Verweilzeit für das Silo insgesamt sinkt damit drastisch ab (der Durchsatz steigt an). Die sich aus der Berechnung ergebende Verweilzeit hängt entscheidend davon ab, über welches Zeitraster t die Steuerimpulse für die Berechnung gebildet werden. Lange Zeitintervalle puffern gewissermaßen die besonderen - von der vorgegebenen Norm abweichenden Situationen - weitgehend ab und ergeben somit kein realitätsnahes Bild. Die Anzeige wird in einem solchen Fall sehr träge und das System kann auf tatsächliche Änderungen kaum reagieren.

Bei einer qualitativ anspruchsvollen Fertigung sind jedoch von der Vorgabe abweichende Verweilzeiten nicht hinnehmbar.

Bei einer zu kurzen Verweilzeit des Schüttguts im Silo kann sich der Zustand des Schüttguts insbesondere in Bezug auf den Feuchtigkeitsanteil nachteilig darstellen.

Aus der DE 39 26 689 A1 ist bereits ein Verfahren zum Steuern des Einlaufes von zu trocknendem Gut in einen Trockengutbehälter und des Auslaufes von getrocknetem Gut aus dem Trockengutbehälter bekannt, bei dem mit im Trockengutbehälter angeordneten Füllstandssonden gearbeitet wird. Dabei soll die Aufgabe gelöst werden, die Verweilzeit des Gutes im Trockengutbehälter zu erfassen. Mit dem bekannten Verfahren ist dies aber nur bei einem vollkontinuierlichen Betrieb wirklich befriedigend möglich. In der Praxis ergeben sich allerdings zwangsläufig immer wieder Unregelmäßigkeiten (Änderungen im zeitlichen Durchsatz oder sogar Unterbrechungen), so dass die Genauigkeit bei dem bekannten Verfahren erhebliche Wünsche offen lässt.

Insbesondere bei der Trocknung von Kunststoffgranulat vor dessen Verarbeitung ist es für die Qualität des späteren Produktes äußerst wichtig, dass der Trocknungsvorgang nach exakten Vorgaben durchgeführt wird und diese auch mit Sicherheit eingehalten werden. Der Trocknungsvorgang darf nicht zu kurz sein, da das Gut sonst nicht ausreichend von Feuchtigkeit befreit ist und sich schlechter verarbeiten lässt. Zu diesem Zweck wird ein Trockengutbehälter gewählt, der zwei Füllstandssonden aufweist, die in einem vorgegebenen Füllstandsabstand angebracht sind, wobei mittels einer Steuerung beim Unterschreiten eines oberen Füllstandes von der ersten oberen Füllstandssonde eine Zeitmessung eingeleitet wird, die beim Unterschreiten eines unteren Füllstandes von der zweiten unteren Füllstandssonde beendet wird und wobei aus der gemessenen Zeitdifferenz und unter Berücksichtigung des Füllstandsabstands der Füllstandssonden, dem Gesamtvolumen und dem Querschnitt des Trockengutbehälters eine Betriebs-Verweilzeit errechnet wird. Mit den beiden Füllstandsonden kann zu Beginn eines Auslaufes eine Zeit gemessen werden, die verstreicht, um den Trockenbehälter um das für den Füllstandsabstands der beiden Füllstandssonden vorgegebene Teilvolumen zu entleeren.

Eine exakte Messung, wann eine bestimmte Füllmenge in den Trockengutbehälter eingeflossen ist und wann sie aus dem Trockengutbehälter wieder austritt, lässt sich auf diese Art und Weise nicht festlegen. Ist beispielsweise eine längere Nachfüllpause eingetreten, so fällt der Materialspiegel im Trocknungsbehälter weiter ab. Wird anschließend wieder nachgefüllt, so kann die sich daraus ergebende verkürzte Verweilzeit nicht erfasst und selbstverständlich auch nicht ausgewertet werden.

Der Erfindung liegt die Aufgabe zu Grunde, ein Verfahren zur Steuerung zu schaffen, mit dessen Hilfe die Verweilzeit realitätsnah errechnet und gesteuert werden kann.

Gemäss kennzeichnendem Teil des Anspruchs 1 erfolgt dies dadurch, dass jedem erfolgreichen Fördervorgang eine Eintrittszeit. D.h. die aktuelle Zeit, beispielsweise die aktuelle Uhrzeit, zugeordnet wird, so ass es möglich ist, zu jedem einzelnen Fördervolumen, welches in den Zwischenspeicher gelangt, eine Verweilzeit zu berechnen, wobei die verweilzeit jeder einzelnen aus dem Zwischenspeicher austretenden Fördermenge bewertet wird.

Vorteilhafte Weiterbildungen ergeben sich aus den Unteransprüchen.

Die Erfindung wird nachfolgend an Hand der Zeichnungsfigur näher erläutert:

Im Fördergerät wird zunächst ein Dosierbehälter mit Schüttgut aufgefüllt und anschließend in den Silo abgegeben. Dabei wird pro Fördervorgang jeweils ein Impuls n abgegeben. Die erfolgreichen Fördervorgänge werden mit der aktuellen Uhrzeit gespeichert und ausgewertet.

Damit ist es möglich zu jedem einzelnen Fördervolumen Vfi, welches in den Silo gelangt, eine Verweilzeit Tvi zu berechnen. Das Fördervolumenelement Vfi hat die Verweilzeit

$$Tvi = ta - ti.$$

Falls ein Massenfluss-Silo als Trocknungssilo eingesetzt wird, lässt sich die Verweilzeit für das jeweils entnommene Volumenelement berechnen, indem die Anzahl Ns der im Silo befindlichen Volumenelemente nach der Formel

$$Ns = Vs / Vf$$

bestimmt wird. In der Datenbank kann man Ns Datensätze zurückverfolgen und findet die zugehörige Zeit ti, mit deren Hilfe sich die zugehörige Verweilzeit Tvi errechnen lässt.

Diese Verweilzeit eines jeden Fördervolumens Vfi lässt sich zusätzlich graphisch, z.B. mit unterschiedlichen Farben über die Silohöhe verteilt, darstellen.

Mit der vorgeschlagenen Berechnung lässt sich die Historie eines jeden einzelnen Fördervolumen über die Verweilzeit im gesamten Silo darstellen. Damit ist es mögliche auch Fehlermeldungen, die sich auf ein einzelnes Volumenelement Vf beziehen, zu generieren.

Außerhalb des Trockensilos ist ein Befüllungsgerät mit zwei Sonden ausgestattet. Es hat die Aufgabe, den Trockengutbehälter stets hinreichend gefüllt zu halten. Immer wenn die untere Sonde im Silo frei wird, löst dies einen Befüllungvorgang aus. Die obere Sonde stellt die richtige Füllung vom Befüllungsgerät sicher. Das Befüllungsgerät hat ein bestimmtes Füllvolumen, beispielsweise 10 Liter. Dem Füllvolumen wird bei Erreichen der oberen Sonde im Silo eine aktuelle Zeit zugewiesen, ein sog. "Zeitstempel" zugeteilt.

Hat der Trockengutbehälter beispielsweise ein Volumen von 100 Litern und eine zeitlich konstante Materialabnahme von 10 Litern pro 15 Minuten, so stellt sinnvollerweise des Befüllungsgerät ein Füllvolumen von 10 Litern zur Verfügung.

In diesem Beispiel kann das Silo 10 Füllvolumina aufnehmen. Die Verweilzeit ist in einem solchen Fall die Zeitdifferenz aus der aktuellen Zeit und dem Zeitstempel des zehnten davor liegenden Volumenelements aus der Fülltabelle, das sich bei 10 Teilvolumina in diesem Moment gerade am Ausgang des Silos befindet.

leicht die Füllung nicht bis zur unteren Sonde, so lässt sich dennoch eine Aussage über die Verweilzeit treffen, weil dann die Anzahl der zuvor einzeln erfassten und noch im Trockengutbehälter befindlichen einzelnen Füllvolumina sowie deren Eintrittszeit bekannt sind.

Jedes einzelne Teilvolumen ist mit seiner zugehörige Eintrittszeit detailliert erfasst und auswertbar.

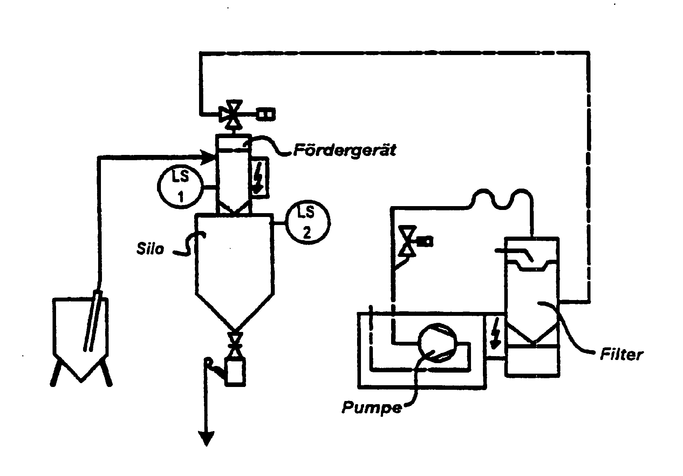

**Patentansprüche**

1.  Verfahren für eine gesteuerte Förderung von Schüttgut mit Erfassung der Verweilzeit in einem Zwischenspeicher, wobei über ein Fördergerät jeweils ein gerätetypisches Fördervolumen dem Zwischenspeicher zugeführt wird und die Fördervorgänge gezählt werden, **dadurch gekennzeichnet, dass** jedem erfolgreichen Fördervorgang eine Eintrittszeit, d.h. die aktuelle Zeit, beispielsweise die aktuelle Uhrzeit, zugeordnet wird, so dass es möglich ist, zu jedem einzelnen Fördervolumen, welches in den Zwischenspeicher gelangt, eine Verweilzeit zu berechnen, wobei die Verweilzeit jeder einzelnen aus dem Zwischenspeicher austretenden Fördermenge bewertet wird.

2.  Verfahren gemäss Anspruch 1, **dadurch gekennzeichnet, dass** bei Unterschreiten einer bestimmten vorgegebenen Mindest-Verweilzeit einer einzelnen Fördermenge im Zwischenspeicher der Austritt dieser einzelnen Fördermenge aus dem Zwischenspeicher unterbunden wird.

3. Verfahren gemäss einem der Ansprüche 1 oder 2, **dadurch gekennzeichnet, dass** die Verweilzeiten der einzelnen Fördermengen im Zwischenspeicher graphisch dargestellt werden.

4. Verfahren gemäss Anspruch 3, **dadurch gekennzeichnet, dass** die Verweilzeiten farblich dargestellt werden.

5. Verfahren nach einem der Ansprüche 1 bis 4, **dadurch gekennzeichnet, dass** es sich bei dem Zwischenspeicher um einen Trocknungsbehälter handelt.

6. Verfahren nach einem der Ansprüche 1 bis 5, **dadurch gekennzeichnet, dass** es sich bei dem Zwischenspeicher um einen Weiterbehandlungsraum handelt.

## Claims

1. Method for controlled conveying of bulk material with detection of the dwell time in an intermediate store, wherein by way of conveying apparatus a respective apparatus-typical conveying volume is fed to the intermediate store and the conveying processes are counted, **characterised in that** an entry time, i.e. the current time, for example the current clock time, is associated with each successful conveying process so that it is possible to calculate a dwell time for each individual conveying volume passing into the intermediate store, wherein the dwell time of each individual conveying quantity exiting the intermediate store is assessed.

2. Method according to claim 1, **characterised in that** on exceeding a specific predetermined minimum dwell time of an individual conveying quantity in the intermediate store the output of - this individual conveying quantity from the intermediate store is prevented.

3. Method according to one of claims 1 and 2, **characterised in that** the dwell timers of the individual conveying quantities in the intermediate store are graphically represented.

4. Method according to claim 3, **characterised in that** the dwell times are represented in colour.

5. Method according to any one of claims 1 to 4, **characterised in that** the intermediate store is a drying vessel.

6. Method according to any one of claims 1 to 5, **characterised in that** the intermediate store is a chamber for further treatment.

## Revendications

1. Procédé de transport contrôlé de matière en vrac avec enregistrement du temps de retenue dans un dispositif de stockage intermédiaire, où des volumes à transporter typiques pour ce dispositif sont amenés par un convoyeur vers le dispositif de stockage intermédiaire et-où le nombre de cycles de transport est compté, **caractérisé en ce que** à chaque cycle de transport accompli est associé un temps d'entrée, à savoir le temps réel comme par exemple l'heure actuelle, de sorte qu'il est possible de calculer pour chaque volume individuel transporté entrant dans le dispositif de stockage intermédiaire un temps de retenue, qui est mesuré pour chaque volume individuel transporté sortant dudit dispositif de stockage intermédiaire.

2. Procédé selon la revendication 1 **caractérisé en ce que** la sortie du volume individuel transporté du dispositif de stockage intermédiaire est bloquée au cas où un temps minimal prédétermine de retenue de chaque volume individuel transporté dans le dispositif de stockage intermédiaire n'est pas atteint.

3. Procédé selon l'une des revendications 1 ou 2 **caractérisé en ce que** le temps de retenue des volumes individuels transportés dans le dispositif de stockage intermédiaire sont représentés graphiquement.

4. Procédé selon la revendication 3 **caractérisé en ce que** les temps de retenue sont représentés en couleur.

5. Procédé selon l'une des revendications 1 à 4 **caractérisé en ce que** le dispositif de stockage intermédiaire est constitué d'un récipient de séchage.

6. Procédé selon l'une des revendications 1 à 4 **caractérisé en ce que** le dispositif de stockage intermédiaire est constitué d'un compartiment de traitement ultérieur.

Fördergerät

LS 1

LS 2

Silo

Filter

Pumpe

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 3926689 A1